# EUROPÄISCHE PATENTSCHRIFT

(11) **EP 4 235 141 B1**
(45) Veröffentlichungstag und Bekanntmachung des Hinweises auf die Patenterteilung: **25.12.2024**
(21) Anmeldenummer: 23157965.7
(22) Anmeldetag: 22.02.2023
(51) Int. Cl.: G01N 1/22

(54) **ABGASENTNAHMESONDE MIT HOHLKÖRPER**
EXHAUST GAS SAMPLING PROBE WITH HOLLOW BODY
SONDE DE PRÉLÈVEMENT DE GAZ D'ÉCHAPPEMENT AVEC CORPS CREUX

(30) Priorität: 24.02.2022 AT 501242022
(43) Veröffentlichungstag der Anmeldung: 30.08.2023
(73) Patentinhaber: AVL DiTest GmbH, 8020 Graz (AT)
(72) Erfinder: Fasching, Michael, 8385 Neuhaus am Klausenbach (AT)
(74) Vertreter: Patentanwälte Pinter & Weiss OG

(56) Entgegenhaltungen:
- WO-A1-2015/044256
- US-A- 3 382 721

## Beschreibung

Die gegenständliche Erfindung betrifft eine Abgasentnahmesonde mit einem Sondeneingang, einem Sondenausgang und einem den Sondeneingang mit dem Sondenausgang verbindenden Gaskanal. Weiters betrifft die gegenständliche Erfindung die Verwendung einer Abgasentnahmesonde in einem Emissionsmessgerät und ein Emissionsmessgerät mit einer derartigen Abgasentnahmesonde.

Emissionsmessgeräte zum Messen von Abgasemissionen, wie von Kohlenwasserstoffen (HC), Kohlenmonoxiden (CO), Kohlendioxiden (CO2), Stickoxiden (NOx) oder Feinstaub, beispielsweise von Verbrennungsmotoren oder von industriellen Prozessen, sind hinlänglich bekannt. Emissionsmessgeräte gibt es in den verschiedensten Ausführungen, wobei je nach Ausführung verschiedene Messprinzipien angewandt werden. Eine Gemeinsamkeit einer Vielzahl von Emissionsmessgeräten ist jedoch, dass jeweils eine Abgasentnahmesonde vorgesehen ist, mit deren Hilfe Abgas aus einem Abgasstrom entnommen wird. In einem derartigen Abgasstrom strömt üblicherweise ein zu analysierendes Abgas, das teilweise oder vollständig entnommen und einem Emissionsmessgerät zugeführt wird. Im Emissionsmessgerät kann entnommenes Abgas bedarfsweise aufbereitet werden (beispielsweise Wasserabscheidung, Entfernen flüchtiger Bestandteile usw.), bedarfsweise verdünnt werden (beispielsweise in einem Verdünnungstunnel) und/oder einer oder mehreren Messstufen zugeführt werden. Üblicherweise wird die Abgasentnahmesonde direkt in das Abgasrohr/den Auspuff eines Verbrennungsmotors, eines Fahrzeugs oder eines industriellen Prozesses eingeführt und während des Messvorgangs fix verankert, beispielsweise durch Festklemmen.

Um einen ordnungsgemäßen und zufriedenstellenden Betrieb eines Emissionsmessgeräts sicherzustellen, muss eine Vielzahl an Aspekten berücksichtigt werden. Hierbei ist darauf zu achten, dass Emissionsmessgeräte robust gegenüber äußeren Einflüssen, die im Umfeld von Abgastests auf ein Emissionsmessgerät und dessen Komponenten einwirken können, gestaltet sind. Als wichtiger äußerer Einfluss sind hierbei hohe Temperaturen zu nennen. Auch das Eintreten von Ruß und von Rußpartikeln in den Gaskanal eines Emissionsmessgerätes ist im gegenständlichen Zusammenhang hervorzuheben. Eine Ansammlung von Ruß oder von Rußpartikeln oder von anderen Produkten des Verbrennungsprozesses kann einen Gaskanal verstopfen. Im schlimmsten Fall können Rußpartikel, aber auch andere Partikel oder auch allgemeine Fremdkörper, zu elektrischen Kurzschlüssen im Emissionsmessgerät führen und damit im Emissionsmessgerät angeordnete elektrische Bauteile beschädigen. Ein wichtiges Beispiel hierfür sind Kurzschlüsse an einem im Emissionsmessgerät vorgesehenen Coronadraht.

Hinsichtlich der Einwirkung von Temperatur und/oder Ruß, aber auch hinsichtlich anderer Einflüsse auf ein Emissionsmessgerät, ist insbesondere auf damit einhergehende Auswirkungen auf die genannten Abgasentnahmesonden zu achten. Aufgrund ihrer üblichen Positionierung in einem Abgasrohr/in einem Auspuff sind Abgasentnahmesonden von Temperatur-, Ruß- und anderen Umwelteinflüssen besonders betroffen. Es ist deshalb wünschenswert, insbesondere Abgasentnahmesonden robust gegenüber Umwelteinflüssen zu gestalten. Das gilt in einem besonderen Maß für den Bereich des Sondeneingangs einer Abgasentnahmesonde, durch welchen Abgas in die Abgasentnahmesonde einströmt. Ebenso ist es von Vorteil, ganze Abgasentnahmesonden oder auch einzelne Komponenten von Abgasentnahmesonden, z.B. Komponenten aus dem Bereich des Sondeneingangs, tauschbar und mit Ersatzteilen ersetzbar zu gestalten.

Obwohl mit Temperatur- und Rußeinwirkung einhergehende Probleme bei Emissionsmessgeräten bekannt sind, werden diese Aspekte im Stand der Technik nur unzureichend aufgegriffen.

So beschreiben die US 3,382,721 A und die EP 2428790 A1 Abgasentnahmesonden mit einer Klemmvorrichtung zu deren Fixierung an einem Abgasrohr. Bei beiden Schriften sind in den Abgasentnahmesonden seitliche Einströmöffnungen in die Gaskanäle der jeweiligen Abgasentnahmesonden vorgesehen, die heißem und rußbehaftetem Abgas ungeschützt ausgesetzt sind. Mit seitlichen Einströmöffnungen ausgestattete Sondeneingänge stellen hierbei besonders sensible Bereiche von Abgasentnahmesonden dar, die gerade im Werkstattbetrieb leicht beschädigt werden können. Möglichkeiten zum Schutz dieser Bereiche oder Möglichkeiten zum Ersatz von leicht beschädigbaren Komponenten sind weder der US 3,382,721 A noch der EP 2428790 A1 zu entnehmen. Eine weitere Abgasentnahmesonde ist im Dokument WO2015044256A1 beschrieben.

Die KR 101917244 B1 zeigt weiters eine Abgasentnahmesonde zur Entnahme von Abgas aus einem Auspuff eines Fahrzeuges. Der Fokus dieser Schrift liegt auf der Sicherstellung eines vorgegebenen Abstandes zur Innenwand des Auspuffs. Auf Temperatur- und Rußeinwirkungen und damit einhergehende Robustheitsüberlegungen wird demnach auch in der KR 101917244 B1 nicht eingegangen.

Sämtliche der in den zitierten Schriften beschriebenen Abgasentnahmesonden weisen demzufolge insbesondere hinsichtlich des wichtigen Aspekts der Robustheit Nachteile auf. Es ist demnach eine Aufgabe der gegenständlichen Erfindung, eine vor allem hinsichtlich ihrer Robustheit verbesserte Abgasentnahmesonde zur Verfügung zu stellen.

Diese Aufgabe wird für eine eingangs genannte Abgasentnahmesonde durch die Merkmale der unabhängigen Ansprüche gelöst. Die unabhängigen Ansprüche beschreiben hierbei eine Abgasentnahmesonde mit einem Sondeneingang, einem Sondenausgang und einem den Sondeneingang mit dem Sondenausgang verbindenden Gaskanal. Insbesondere ist hierbei eine rohrförmige Abgasentnahmesonde mit einem an einem ersten axialen Ende der Abgasentnahmesonde angeordneten Sondeneingang, einem an einem gegenüberliegenden zweiten axialen Ende der Abgasentnahmesonde angeordneten Sondenausgang und einem axial durch die Abgasentnahmesonde hindurchgeführten, den Sondeneingang mit dem Sondenausgang verbindenden Gaskanal zur Entnahme eines vom Sondeneingang durch den Gaskanal zum Sondenausgang strömbaren Abgases vorgesehen. Die unabhängigen Ansprüche beschreiben weiters die Verwendung einer erfindungsgemäßen Abgasentnahmesonde in einem Emissionsmessgerät und ein Emissionsmessgerät.

Erfindungsgemäß ist ein Hohlkörper zumindest teilweise, vorzugsweise vollständig im Gaskanal der Abgasentnahmesonde angeordnet, wobei der Hohlkörper einen von einer Mantelfläche umgebenen Hohlraum, zumindest eine in der Mantelfläche des Hohlkörpers angeordnete Eintrittsöffnung in den Hohlraum, zumindest eine, auf einer dem Sondenausgang zugewandten Seite des Hohlkörpers angeordnete Austrittsöffnung und eine vom Sondenausgang abgewandte, fluiddicht verschlossene Stirnseite aufweist. Am Hohlkörper ist erfindungsgemäß zwischen der verschlossenen Stirnseite und zumindest einer der Austrittsöffnung nächstgelegenen Eintrittsöffnung ein entlang einer Längserstreckung des Hohlkörpers verlaufender erster Hohlkörper-Abschnitt ausgebildet, dessen durch seine Mantelfläche definierte, normal zur Längserstreckung des Hohlkörpers orientierte äußere Querschnittsfläche kleiner ist als eine innere Querschnittsfläche des Gaskanals im Bereich des ersten Hohlkörper-Abschnitts, sodass sich im Bereich des ersten Hohlkörper-Abschnitts im Gaskanal zumindest ein Spalt ausbildet, welcher den Sondeneingang mit der zumindest einen Eintrittsöffnung durchströmbar verbindet. Erfindungsgemäß ist entlang der Längserstreckung des Hohlkörpers zwischen dem ersten Hohlkörper-Abschnitt und der Austrittsöffnung ein zweiter Hohlkörper-Abschnitt ausgebildet, dessen normal zur Längserstreckung des Hohlkörpers orientierte äußere Querschnittsfläche korrespondierend zur inneren Querschnittsfläche des Gaskanals ausgeführt ist, sodass ein Strömungsweg durch die Abgasentnahmesonde vom Sondeneingang durch den zumindest einen Spalt über die zumindest eine Eintrittsöffnung durch den Hohlraum des Hohlkörpers über die zumindest eine Austrittsöffnung zum Sondenausgang verläuft. Entlang des Strömungsweges kann Abgas durch die Abgasentnahmesonde vom Sondeneingang durch den zumindest einen Spalt über die zumindest eine Eintrittsöffnung durch den Hohlraum des Hohlkörpers über die zumindest eine Austrittsöffnung zum Sondenausgang strömen.

Der beschriebene erfindungsgemäße Aufbau einer Abgasentnahmesonde ermöglicht einerseits einen effektiven Schutz des Gaskanals der Abgasentnahmesonde und nachgelagerter Messgeräte vor potentiell schadhaften Partikeln, wie großen Rußpartikeln. Wie nachfolgend detailliert ausgeführt wird, können große und potentiell schadhafte Partikel bei einer erfindungsgemäßen Abgasentnahmesonde aus mehreren Gründen nicht in den Hohlraum des Hohlkörpers gelangen und damit in weiterer Folge nicht durch den Gaskanal strömen bzw. sich in weiterer Folge nicht durch den Gaskanal hindurchbewegen. Zudem ist die Komponente, die maßgeblich zu diesem Schutz beiträgt, nämlich der Hohlkörper, im Vergleich zu aus dem Stand der Technik bekannten Abgasentnahmesonden wesentlich besser vor äußeren Einwirkungen geschützt. Da der Hohlkörper überwiegend bzw. vollständig von der Außenwand der Abgasentnahmesonde ummantelt ist, ist der Hohlkörper insbesondere im teils rauen Werkstattbetrieb vor äußeren Einwirkungen, wie Krafteinwirkungen oder Stößen oder Schlägen, geschützt. Das angestrebte Ziel einer erhöhten Robustheit einer Abgasentnahmesonde wird damit erreicht.

In einer Variante der Erfindung ist an einer vom Sondeneingang abgewandten Seite des zweiten Hohlkörper-Abschnitts zumindest eine Dichtfläche ausgebildet, die im montierten Zustand des Hohlkörpers mit einer korrespondierenden Dichtfläche der inneren Oberfläche des Gaskanals dichtend zusammenwirkt. Auf diese Weise wird sichergestellt, dass Abgas den beschriebenen Strömungsweg durch die Eintrittsöffnung in das Innere des Hohlkörpers und weiter in den Gaskanal nimmt.

In einer besonders vorteilhaften Weise ist der Hohlkörper lösbar im Gaskanal angeordnet und/oder anordenbar, vorzugsweise mit der Innenwand des Gaskanals verbunden. Dadurch kann eine Reihe weiterer Vorteile realisiert werden. Einerseits kann ein Hohlkörper auf diese Weise zu Reinigungszwecken aus der Abgasentnahmesonde gelöst, und nach der Reinigung wieder in die Abgasentnahmesonde eingesetzt werden. Andererseits wird es anhand eines lösbaren Hohlkörpers möglich, einen gegebenenfalls defekten Hohlkörper zur Gänze zu tauschen. Die lösbare Anordnung lässt sich beispielsweise durch Verschrauben, Verrasten oder Verklemmen erreichen, wobei auch andere Lösungen möglich sind.

An die Lösbarkeit eines Hohlkörpers anknüpfend ist es vielfach von Vorteil, auf der von der Austrittsöffnung abgewandten Seite der fluiddicht verschlossenen Stirnseite des Hohlkörpers eine Werkzeugaufnahme vorzusehen. Auf diese Weise kann das beschriebene Lösen und Wiedereinsetzen eines Hohlkörpers in eine Abgasentnahmesonde schnell und effektiv mittels eines Werkzeuges erfolgen, wie beispielsweise mit einem Innensechskantschlüssel.

Für die Praxis relevant ist hierbei überdies eine zwei- oder mehrteilige Ausführung einer erfindungsgemäßen Abgasentnahmesonde mit dem Hohlkörper, einer das erste axiale Ende der Abgasentnahmesonde bildenden Sondenspitze und einem axial an die Sondenspitze anschließenden Sondenkörper. Insbesondere das den Sondeneingang aufweisende, erste axiale Ende der Abgasentnahmesonde kann vielfach komplex und detailreich ausgeführt sein (z.B. durch äußere Kupplungsteile, Stützelemente, die Anordnung eines Filters, usw.). Aufgrund dieser Komplexität ist es oftmals vorteilhaft, diesen speziellen, üblicherweise als Sondenspitze bezeichneten Bereich einer Abgasentnahmesonde separat zu fertigen. Eine Sondenspitze kann in der Folge mit dem, üblicherweise als Sondenkörper bezeichneten, axial an die Sondenspitze anschließenden Teil der Abgasentnahmesonde verbunden werden, beispielsweise durch Verpressen, Verschweißen oder Verschrauben. In den üblichen Fällen ist es vorteilhaft, den erfindungsgemäßen Hohlkörper im Bereich des ersten axialen Endes der Abgasentnahmesonde anzuordnen, um potentiell schadhafte Partikel gleich zu Beginn am Eintritt in die Abgasentnahmesonde zu hindern. In besonders vorteilhafter Weise ist daher eine Sondenspitze derart gefertigt, dass ein erfindungsgemäßer Hohlkörper zumindest teilweise, vorzugsweise vollständig in der Sondenspitze angeordnet werden kann.

Eine Sondenspitze kann hierbei in einer vorteilhaften Weise auch als Kupplungsteil einer Verbindungskupplung ausgeführt sein. Insbesondere ist dabei die Sondenspitze als erstes oder zweites Kupplungsteil einer Verbindungskupplung ausgeführt. Zu Selbsttest- und Überprüfungszwecken kann eine Abgasentnahmesonde in einem solchen Fall mit einer Selbsttesteinheit verbunden werden, welche ein komplementäres Kupplungsteil zur Verbindung mit der Abgasentnahmesonde aufweist. Gerade im Werkstattbetrieb können eine Abgasentnahmesonde und ein mit dieser verbindbares Emissionsmessgerät auf diese Weise schnell, einfach und zuverlässig zum Testen mit einer Selbsttesteinheit verbunden werden. Eine derartige Selbsttesteinheit kann beispielsweise als Teil eines Emissionsmessgeräts ausgeführt sein.

In einer weiteren vorteilhaften Ausgestaltung ist an der Außenwand einer erfindungsgemäßen Abgasentnahmesonde, vorzugsweise im Bereich der Sondenspitze, zumindest ein radial abstehendes Stützelement vorgesehen. Insbesondere kann das Stützelement umlaufend, also die Sondenspitze umgebend, ausgeführt sein. Dadurch wird es beispielsweise bei einem Einsatz der Abgasentnahmesonde in einem Abgasrohr oder Auspuff möglich, stets einen vorgegebenen Abstand zur Innenwand des Abgasrohres oder Auspuffes sicherzustellen.

In einer weiteren Variante der Erfindung entspricht die radiale Querschnittsfläche des Spaltes im Wesentlichen der Summe der Querschnittsflächen der in der Mantelfläche des Hohlkörpers vorgesehenen Eintrittsöffnungen. Vorzugsweise ist eine vorgegebene Maximalabweichung Eₘₐₓ zwischen der radialen Querschnittsfläche des Spaltes und der Summe der Querschnittsflächen der Eintrittsöffnungen festgelegt. Mit anderen Worten weicht die radiale Querschnittsfläche des Spaltes um nicht mehr als eine vorgegebene Maximalabweichung Eₘₐₓ von der Summe der Querschnittsflächen der in der Mantelfläche des Hohlkörpers vorgesehenen Eintrittsöffnungen ab. Bevorzugt kann die vorgegebene Maximalabweichung Eₘₐₓ dabei als Relativwert der Summe der Querschnittsflächen der Eintrittsöffnungen angegeben werden. Die Maximalabweichung Eₘₐₓ kann einem Relativwert von 30%, oder einem Relativwert von 20%, oder einem Relativwert von 10% entsprechen.

Auf diese Weise können die Druckverhältnisse im Bereich des den Sondeneingang aufweisenden, ersten axialen Endes der Abgasentnahmesonde gezielt beeinflusst werden. Unter anderem kann so bei transienten Druckänderungen im Abgasstrom oder in einem Abgasrohr, in dem die Abgasentnahmesonde angeordnet ist, eine Stabilisierung des Betriebs der Abgasentnahmesonde oder eines angeschlossenen Emissionsmessgerätes erreicht werden.

Bei der Auslegung einer erfindungsgemäßen Abgasentnahmesonde sind die jeweiligen Durchmesser der in der Mantelfläche des Hohlkörpers vorgesehenen Eintrittsöffnungen jeweils kleiner als ein vorgegebener Maximaldurchmesser Dₘₐₓ. Der Maximaldurchmesser Dₘₐₓ kann hierbei in einem Wertebereich von 10µm bis 100mm, oder in einem Wertebereich von 100µm bis 10mm, oder in einem Wertebereich von 500µm bis 10mm liegen, um den Eintritt großer und potentiell schadhafter Rußpartikel wirksam zu unterbinden.

Zur Befestigung der Abgasentnahmesonde an einem Abgasrohr kann an der Außenwand der Abgasentnahmesonde, vorzugsweise im Bereich des Sondenausgangs, eine Befestigungseinheit zur Befestigung der Abgasentnahmesonde an einem Abgasrohr vorgesehen sein, die unter anderem in Form einer Federklemme ausgeführt sein kann. Insbesondere kann es sich hierbei um ein Abgasrohr eines Fahrzeugs oder einer stationären Einheit mit einem Verbrennungsmotor oder einer andere Energieerzeugungseinheit, die entsprechende Abgase emittiert, handeln.

Eine erfindungsgemäße Abgasentnahmesonde kann dazu eingesetzt werden, Abgas aus einem Abgasstrom zu entnehmen und dieses einem Emissionsmessgerät zuzuführen. An einem Emissionsmessgerät kann dazu eine Abgasleitung angeschlossen sein, wobei die Abgasentnahmesonde am dem Emissionsmessgerät abgewandten Ende der Abgasleitung zur Entnahme von Abgas vorgesehen ist.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig. 1 eine schematische, perspektivische Ansicht einer erfindungsgemäßen Abgasentnahmesonde,
Fig. 2 eine Schnittansicht entlang einer Längserstreckung eines Teils einer erfindungsgemäßen Abgasentnahmesonde mit einem erfindungsgemäßen Hohlkörper,
Fig. 3 einen Hohlkörper in perspektivischer Ansicht,
Fig. 4 einen Hohlkörper in Schnittdarstellung entlang einer Längserstreckung des Hohlkörpers,
Fig. 5 die Verwendung einer erfindungsgemäßen Abgasentnahmesonde zur Abgasentnahme aus einem Auspuff eines Fahrzeugs und Weiterleitung desselben in ein Emissionsmessgerät, und
Fig. 6 eine zweifach mit einem Emissionsmessgerät verbundene Abgasentnahmesonde.

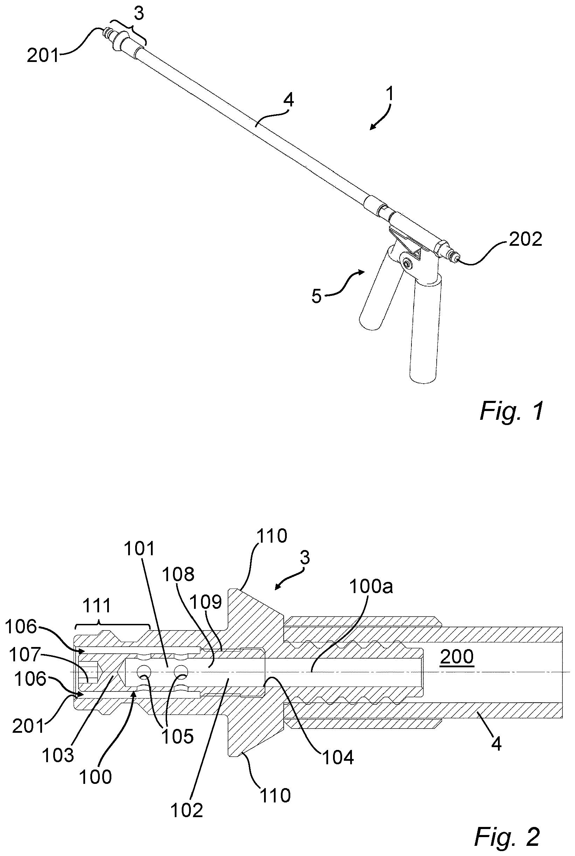

Fig. 1 zeigt eine schematische Darstellung einer Abgasentnahmesonde 1 im Sinne der gegenständlichen Erfindung. Die dargestellte Abgasentnahmesonde 1 ist dabei im Wesentlichen rohrförmig ausgeführt und weist einen an einem ersten axialen Ende der Abgasentnahmesonde 1 angeordneten Sondeneingang 201 und einen an einem gegenüberliegenden zweiten axialen Ende der Abgasentnahmesonde 1 angeordneten Sondenausgang 202 auf. Der Sondeneingang 201 ist mit dem Sondenausgang 202 über einen Sondenkörper 4 mechanisch verbunden, wobei der Sondenkörper 4 einen (in Fig. 1 nicht dargestellten) in axialer Richtung durchströmbaren Gaskanal 200 fluiddicht ummantelt, sodass Abgas über den Sondeneingang 201 in die Abgasentnahmesonde 1 einströmen, die Abgasentnahmesonde 1 durch den Gaskanal 200 durchströmen und abschließend die Abgasentnahmesonde 1 durch den Sondenausgang 202 wieder verlassen kann.

Mit anderen Worten ist die Abgasentnahmesonde 1 rohrförmig ausgeführt mit einem an einem ersten axialen Ende der Abgasentnahmesonde 1 angeordneten Sondeneingang 201, einem an einem vorzugsweise dem ersten Ende gegenüberliegenden, zweiten axialen Ende der Abgasentnahmesonde 1 angeordneten Sondenausgang 202 und einem axial durch das Innere der Abgasentnahmesonde 1 hindurchgeführten, den Sondeneingang 201 mit dem Sondenausgang 202 verbindenden Gaskanal 200 zur Entnahme eines vom Sondeneingang 201 durch den Gaskanal 200 zum Sondenausgang 202 strömbaren Abgases.

Die Abgasentnahmesonde 1 ist bevorzugt aus Edelstahl gefertigt, um chemisch aggressiven Abgasbestandteilen widerstehen zu können und um eine zu starke Abkühlung des Abgases in der Abgasentnahmesonde 1 zu verhindern. Eine Fertigung aus anderen Werkstoffen ist aber ebenso denkbar.

Wie nachfolgend im Detail ausgeführt wird, kann im gegenständlichen Zusammenhang insbesondere das den Sondeneingang 201 aufweisende erste axiale Ende der Abgasentnahmesonde 1 komplex und detailreich ausgeführt sein (z.B. durch äußere Kupplungsteile, Stützelemente, die Anordnung eines Filters usw.). Dieser spezielle Bereich einer Abgasentnahmesonde 1 wird in vielen Fällen und so auch im Zuge der nachfolgenden Ausführungen speziell als Sondenspitze 3 bezeichnet. Eine Sondenspitze 3 kann im Fall einer einteiligen Ausführung einer Abgasentnahmesonde 1 mit dem Sondenkörper 4 einen einteiligen mechanischen Körper bilden und mit dem Sondenkörper 4 unlösbar verbunden sein. Im Fall einer mehrteiligen Ausführung einer Abgasentnahmesonde 1 kann eine Sondenspitze 3 aber auch eine vom Sondenkörper 4 separate Komponente darstellen und bei der Zusammensetzung der Abgasentnahmesonde 1 lösbar (z.B. durch Verschrauben) oder aber auch unlösbar (z.B. durch Verschweißen oder Verpressen) mit dem Sondenkörper 4 verbunden werden.

Weiters ist in Fig. 1 eine Befestigungseinheit 5 zur Befestigung der Abgasentnahmesonde 1 gezeigt, die im Bereich des Sondenausgangs 202 angeordnet ist. Die Befestigungseinheit 5 kann unter anderem in Form einer Federklemme ausgeführt sein, und dient dazu, die Abgasentnahmesonde 1 an einer ausgewählten Stelle zu fixieren bzw. festzuklemmen, wie an einem Abgasrohr bzw. an einem Auspuff eines Fahrzeuges. Es ist allerdings auch eine Ausführung der Abgasentnahmesonde 1 mit einer anders realisierten Befestigungseinheit 5 denkbar und auch eine Abgasentnahmesonde 1 ohne einer Befestigungseinheit 5.

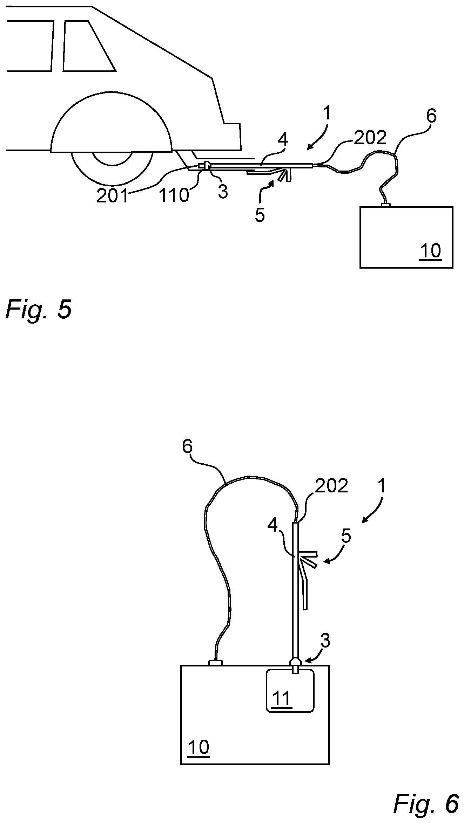

Entsprechend den vorgehenden Ausführungen kann eine wie in Fig. 1 gezeigte Abgasentnahmesonde 1 beispielsweise in ein Abgasrohr z.B. eines Kraftfahrzeuges (Kfz) eingeführt werden, mittels der Befestigungseinheit 5 fixiert werden, zu analysierendes bzw. zu untersuchendes Abgas durch den Sondeneingang 201 aufnehmen, das aufgenommene Abgas durch den im Sondenkörper 4 vorgesehenen Gaskanal 200 durch die Abgasentnahmesonde 1 hindurchleiten, und das Abgas anschließend über den Sondenausgang 202 wieder ausgeben. Ausgehend vom Sondenausgang 202 kann das entnommene Abgas insbesondere über eine weitere Abgasleitung 6 an ein Emissionsmessgerät 10 weitergeführt werden, wie in Fig. 5 dargestellt ist.

Zur näheren Diskussion der Erfindung zeigt Fig. 2 das erste axiale Ende der Abgasentnahmesonde 1 mit dem Sondeneingang 201 in Schnittdarstellung. Das dargestellte erste axiale Ende der Abgasentnahmesonde 1 ist hierbei mehrteilig ausgeführt, d.h. es ist eine vom Sondenkörper 4 (zunächst) separate Sondenspitze 3 vorgesehen. Im gegebenen Fall sind Sondenkörper 4 und Sondenspitze 3 unlösbar miteinander verpresst. Grundsätzlich sind aber auch andere Methoden zur Verbindung einer Sondenspitze 3 und eines Sondenkörpers 4 denkbar, wie Verschweißen, Verkleben oder Verlöten.

Die Außenwand der Sondenspitze 3 weist im gezeigten Fall an einem axialen Ende ein Kupplungsteil 111 einer Verbindungskupplung auf und am anderen axialen Ende eine Kontur geeignet zum Verpressen mit dem Sondenkörper 4. Axial dazwischen ist in dieser Ausführung ein radial abstehendes Stützelement 110 zur Positionierung der Abgasentnahmesonde 1 in einem Abgasrohr. Auf das Kupplungsteil 111 und auf das Stützelement 110 wird an späterer Stelle gesondert eingegangen.

Der Sondenkörper 4 umschließt einen Gaskanal 200, durch welchen Abgas in axialer Richtung vom Sondeneingang 201 zum Sondenausgang 202 strömen kann. Um die durchströmbare Verbindung zwischen Sondeneingang 201 und Sondenausgang 202 nicht zu unterbrechen, ist der Gaskanal 200 in der in Fig. 2 gezeigten Ausführung durch die Sondenspitze 3 hindurch bis zum Sondeneingang 201 fortgesetzt.

Im Gaskanal 200, in der gezeigten Ausführung im von der Sondenspitze 3 ummantelten Abschnitt des Gaskanals 200, ist erfindungsgemäß ein Hohlkörper 100 angeordnet. Die Längserstreckung 100a des Hohlkörpers fällt hier im Wesentlichen mit der Längsachse des Hohlkörpers 4 zusammen.

Die dargestellte Abgasentnahmesonde 1 ist mehrteilig ausgeführt, mit dem Hohlkörper 100, einer das erste axiale Ende der Abgasentnahmesonde 1 bildenden, den Hohlkörper 100 aufnehmenden Sondenspitze 3 und einem in axialer Richtung an die Sondenspitze 3 anschließenden Sondenkörper 4.

Im dargestellten Ausführungsbeispiel ist der Hohlkörper 100 vollständig im Gaskanal 200 angeordnet, kann aber in Varianten auch nur teilweise im Gaskanal 200 aufgenommen sein. Der Hohlkörper 100 weist einen im Inneren des Hohlkörpers 100 ausgebildeten und von einer Mantelfläche umgebenen Hohlraum 108 auf. Der Hohlraum 108 ist über mehrere, in der Mantelfläche des Hohlkörpers 100 angeordnete Eintrittsöffnungen 105 mit der Umgebung des Hohlkörpers 100 verbunden. An einer dem Sondenausgang 202 zugewandten Seite des Hohlkörpers 100 ist eine, den Hohlraum 108 mit dem Gaskanal 200 durchströmbar verbindende, Austrittsöffnung 104 vorgesehen, eine vom Sondenausgang 202 abgewandte Stirnseite 103 ist fluiddicht verschlossen ausgeführt. In der in Fig. 2 gezeigten Ausführung ist der Hohlkörper 100 innerhalb der Sondenspitze 3 angeordnet. Wie erwähnt, sind im Rahmen der Erfindung auch Ausführungen einer Abgasentnahmesonde 1 ohne Sondenspitze 3 denkbar. Der Hohlkörper 100 kann in solchen Fällen in einem vom Sondenkörper 4 umschlossenen Abschnitt des Gaskanals 200 angeordnet sein.

Um trotz im Gaskanal 200 angeordnetem Hohlkörper 100 einen vom Sondeneingang 201 bis zum Sondenausgang 202 durchgehenden Strömungsweg bzw. Strömungspfad für das zu entnehmende Abgas sicherzustellen, ist der Hohlkörper 100 derart ausgelegt, dass sich zwischen der verschlossenen Stirnseite 103 des Hohlkörpers 100 und zumindest einer Eintrittsöffnung 105 in der Mantelfläche des Hohlkörpers 100 ein erster Hohlkörper-Abschnitt 101 ausbildet. Wenn mehrere Eintrittsöffnungen 105 vorgesehen sind, handelt es sich bei der erwähnten einen Eintrittsöffnung 105, die zur Definition des ersten Hohlkörper-Abschnitts 101 herangezogen wird, um diejenige Eintrittsöffnung 105, die der Austrittsöffnung 104 nächstgelegen ist. Die der Austrittsöffnung 104 nächstgelegene Eintrittsöffnung 105 weist die geringste axiale Distanz zur Austrittsöffnung 104 auf. Die normal zu einer Längserstreckung 100a des Hohlkörpers 100 orientierte äußere Querschnittsfläche des ersten axialen Hohlkörper-Abschnitts 101, welche durch die Mantelfläche des ersten axialen Hohlkörper-Abschnitts 101 definiert ist, ist dabei an die Geometrie des Gaskanals 200 angepasst.

Erfindungsgemäß ist die äußere Querschnittsfläche des ersten Hohlkörper-Abschnitts 101, welche durch die Mantelfläche des ersten axialen Hohlkörper-Abschnitts 101 definiert ist, kleiner als eine normal zur Längserstreckung 100a des Hohlkörpers 100 verlaufende innere Querschnittsfläche des Gaskanals 200 im Bereich des ersten Hohlkörper-Abschnitts 101 gewählt, so dass sich im Bereich des ersten Hohlkörper-Abschnitts 101 im Gaskanal 200 zumindest ein Spalt 106 ausbildet. Während im dargestellten Ausführungsbeispiel der Spalt 106 als umlaufender Ringspalt ausgeführt ist, sind auch Varianten denkbar, bei denen der Spalt 106 ein Ringsegment darstellt oder der Spalt 106 als eine oder mehrere Nuten in einer Richtung parallel zur Längserstreckung 100a des Hohlkörpers 100 in der Mantelfläche des ersten Hohlkörper-Abschnitts 101 umgesetzt ist. Der Spalt 106 ist also zwischen der inneren Oberfläche des Gaskanals 200 und der äußeren Mantelfläche des Hohlkörpers 100, insbesondere des ersten Hohlkörper-Abschnitts 101, ausgeführt und reicht zumindest vom Sondeneingang 201 bis zu einer Eintrittsöffnung 105 oder bis zu mehreren Eintrittsöffnungen 105.

Durch den Spalt 106 entsteht eine durchströmbare Verbindung zwischen dem Sondeneingang 201 der Abgasentnahmesonde 1 mit zumindest einer Eintrittsöffnung 105 des Hohlkörpers 100 zum Sondenausgang 202. Auf diese Weise wird der Gaskanal 200 durch den Hohlkörper 100 nicht zur Gänze verschlossen.

Neben dem ersten Hohlkörper-Abschnitt 101 zeigt Fig. 2 einen zweiten Hohlkörper-Abschnitt 102 des Hohlkörpers 100, der entlang der Längserstreckung 100a des Hohlkörpers 100 zwischen dem ersten Hohlkörper-Abschnitt 101 und der Austrittsöffnung 104 ausgebildet ist. Der zweite Hohlkörper-Abschnitt 102 ist im dargestellten Ausführungsbeispiel zwischen der (bzw. den) vom Sondeneingang 201 in axialer Richtung am weitesten entfernt gelegenen Eintrittsöffnung(en) 105 und der Austrittsöffnung 104 des Hohlkörpers 100 vorgesehen. Der zweite Hohlkörper-Abschnitt 102 kann wie in den Figuren dargestellt den gesamten Bereich zwischen dem ersten Hohlkörper-Abschnitt 101 und der Austrittsöffnung 104 abdecken, sich aber auch nur über einen Teil dieses Bereichs erstrecken. Wie im Ausführungsbeispiel gemäß Fig. 2 dargestellt, kann der zweite Hohlkörper-Abschnitt 102 an seiner Mantelfläche eine Dichtfläche 109 aufweisen, die mit einer gegengleichen Dichtfläche an der Innenwand des Gaskanals 200 zusammenwirkt. Mit anderen Worten ist an einer vom Sondeneingang 201 abgewandten Seite des zweiten Hohlkörper-Abschnitts 102 eine Dichtfläche 109 ausgebildet, die im montierten Zustand des Hohlkörpers 100 im Gaskanal 200 mit einer korrespondierenden Dichtfläche der inneren Oberfläche des Gaskanals 200 dichtend zusammenwirkt.

Bei den korrespondierenden Dichtflächen 109 kann es sich beispielsweise um ein Gewinde handeln, mit dem der Hohlkörper 100 in den Gaskanal 200 eingeschraubt bzw. einschraubbar ist. Durch dieses Merkmal kann Abgas vom Sondeneingang 201 nur noch durch den zumindest einen Spalt 106 über die zumindest eine Eintrittsöffnung 105 durch den Hohlraum 108 des Hohlkörpers 100 über die zumindest eine Austrittsöffnung 104 zum Sondenausgang 202 strömen.

Berühren sich der Hohlkörper 100 und die Innenwand des Gaskanals andererseits stirnseitig im Bereich der dem Sondeneingang 201 abgewandten Stirnseite des Hohlkörpers 100, kann eine Dichtfläche 109 auch im Bereich einer dem Sondeneingang 201 abgewandten Stirnseite des Hohlkörpers 100 angeordnet sein. Eine stirnseitig angeordnete Dichtfläche 109 kann insbesondere bei einem mittels einer Steckverbindung im Gaskanal 200 fixierten Hohlkörper 100 vorteilhaft sein.

Fig. 2 zeigt eine solche Lösung, bei der der Gaskanal 200 im Bereich der Sondenspitze 3 ausgehend vom Sondeneingang 201 einen ersten Abschnitt mit einem ersten Durchmesser und einen zweiten Abschnitt mit einem zweiten Durchmesser aufweist, wobei der zweite Durchmesser kleiner ist als der erste Durchmesser und sich am Übergang vom ersten zum zweiten Abschnitt ein insbesondere umlaufender Absatz ausbildet. Im ersten Abschnitt wird der Hohlkörper 100 aufgenommen. Der umlaufende Absatz, an dem die dem Sondenausgang 202 zugewandte Stirnseite des Hohlkörpers 100 mit der Austrittsöffnung 104 im montierten Zustand des Hohlkörpers 100 anliegt, bildet damit die mit der Dichtfläche 109 zusammenwirkende Dichtfläche der inneren Oberfläche des Gaskanals 200.

Ebenso können kombiniert sowohl stirnseitig angeordnete als auch an der Mantelfläche des zweiten axialen Hohlkörper-Abschnitt 102 angeordnete Dichtflächen 109 vorgesehen sein. Es können aber auch ausschließlich an der Mantelfläche des zweiten axialen Hohlkörper-Abschnitt 102 oder ausschließlich an der dem Sondeneingang 201 abgewandten Stirnseite eine oder mehrere Dichtflächen 109 vorgesehen sein, die jeweils mit einer gegengleichen Dichtfläche an der Innenwand des Gaskanals 200 zusammenwirken. Ebenso können Bereiche der Mantelfläche des zweiten axialen Hohlkörper-Abschnitt 102 als abstehende Radialstufen ausgeführt sein, die eine Dichtfläche 109 ausbilden.

Durch das Vorsehen der beschriebenen Dichtflächen 109 wird sichergestellt, dass mit der Abgasentnahmesonde 1 entnommenes Abgas nur noch entlang eines Strömungsweges bzw. entlang von Strömungspfaden strömen kann, welche durch eine der Einströmöffnungen 105 in der Mantelfläche des Hohlkörpers 100 verlaufen. Werden die Einströmöffnungen 105 und/oder der Spalt 106 ausreichend klein gewählt, kann auf diese Weise effektiv verhindert werden, dass potentiell schadhafte Rußpartikel, die wegen ihrer Größe zu Verstopfungen im Gaskanal 200 oder zu Beschädigungen im einem gegebenenfalls mit der Abgasentnahmesonde 1 verbundenen Emissionsmessgerät 10 führen können, überhaupt in den Gaskanal 200 eintreten. Dieser Effekt kann sich teils entscheidend auf die Lebensdauer eines Emissionsmessgeräts 10, aber auch auf die Lebensdauer einer zugehörigen Abgasentnahmesonde 1 auswirken.

Wie nachfolgend im Detail ausgeführt wird, weist der genannte Strömungsweg bzw. weisen die genannten Strömungspfade teils starke Richtungsänderungen bzw. Umlenkungen auf. Größere Rußpartikel oder andere größere Partikel oder andere Fremdkörper können starken Richtungsänderungen bzw. Umlenkungen bei den in der Praxis gegebenen Strömungsgeschwindigkeiten vielfach nicht folgen, unter anderem aufgrund ihres Massenträgheitsmoments. Diese Art der Abscheidung wird auch als Impaktion bezeichnet. Solche großen Rußpartikel können von der verschlossenen Stirnseite 103 zurückprallen oder sich im Spalt 106 sammeln. Auch auf diese Weise wird der Eintritt von Rußpartikeln in den Gaskanal 200 verhindert.

In einer vorteilhaften Weise können zur Festlegung der Größen der jeweiligen Einströmöffnungen 105 die Durchmesser der Eintrittsöffnungen 105 jeweils kleiner als ein vorgegebener Maximaldurchmesser Dₘₐₓ vorgegeben werden. Der Maximaldurchmesser Dₘₐₓ kann dabei in einem Wertebereich von 10µm bis 100mm, oder in einem Wertebereich von 100µm bis 10mm, oder in einem Wertebereich von 500µm bis 10mm vorgegeben werden, um für verschiedene Partikelgrößen, die sich in verschiedenen Anwendungen (LKW, PKW, Motorrad) unterscheiden können, jeweils geeignete Größen der Einströmöffnungen 105 sicherzustellen.

In einer vergleichbaren Weise kann auch die Querschnittsfläche des Spaltes 106, der sich im Bereich des ersten axialen Hohlkörper-Abschnitts 101 im Gaskanal 200 zwischen der Innenwand des Gaskanals 200 und dem Hohlkörper 100 bildet, ausreichend klein gewählt werden, um bereits am Sondeneingang 201 eine Hürde für große Rußpartikel oder andere Partikel vorzusehen.

Zur Vorgabe der Querschnittsfläche des Spaltes 106 kann die Summe der Querschnittsflächen der in der Mantelfläche des Hohlkörpers 100 vorgesehenen Eintrittsöffnungen 105 ermittelt werden. Ausgehend von dieser Summe der Querschnittsflächen der in der Mantelfläche des Hohlkörpers 100 vorgesehenen Eintrittsöffnungen 105 kann für die Querschnittsfläche des Spaltes 106 eine Maximalabweichung Eₘₐₓ vorgegeben werden, um welche die Querschnittsfläche des Spaltes 106 nicht von der Summe der Querschnittsflächen der in der Mantelfläche des Hohlkörpers 100 vorgesehenen Eintrittsöffnungen 105 abweichen darf.

Die vorgegebene Maximalabweichung Eₘₐₓ kann dabei als Relativwert der Summe der Querschnittsflächen der in der Mantelfläche des Hohlkörpers 100 vorgesehenen Eintrittsöffnungen 105 vorgegeben werden, wobei die Maximalabweichung Eₘₐₓ einem Relativwert von 30%, oder einem Relativwert von 20%, oder einem Relativwert von 10% entsprechen kann. Durch die Kombination von ausreichend kleinen Eintrittsöffnungen 105 und einer, in Abhängigkeit von der Größe der Eintrittsöffnungen 105 geeignet gewählten Querschnittsfläche des Spaltes 106 kann ein Eintritt von zu großen und damit potentiell schädigenden Rußpartikeln oder anderen Partikeln oder allgemeinen Fremdkörpern in den Gaskanal 200 verhindert werden.

Dabei kann die Abscheidung schädigender Rußpartikel oder anderer Partikel oder allgemeiner Fremdkörper durch Formschluss erfolgen, wenn Rußpartikel oder andere Partikel oder allgemeine Fremdkörper aus geometrischen Gründen die Eintrittsöffnungen 105 nicht überwinden können. Die Abscheidung schädigender Rußpartikel oder anderer Partikel oder allgemeiner Fremdkörper kann aber auch durch Impaktion erfolgen. Impaktion wird in diesem Zusammenhang verstanden als ein Vorgang, bei dem z.B. Rußpartikel Richtungsänderungen eines Gasstromes aufgrund ihrer Massenträgheit nicht folgen können. Im Falle der Impaktion können die Eintrittsöffnungen 105 und/oder der Spalt 106 und/oder der gesamte Hohlkörper 100 derart ausgelegt werden, dass eine massenträgheitsbasierte Abscheidung für Rußpartikel oder andere Partikel oder allgemeine Fremdkörper ab einer Größe von 0,5 µm bis 1 mm erfolgen kann. Diese Auslegung kann in Abhängigkeit eines erwarteten/angenommenen/gegebenen Abgasstromes, oder in Abhängigkeit von Eigenschaften eines erwarteten/angenommenen/gegebenen Abgasstromes, wie beispielsweise dessen Strömungsgeschwindigkeit, Massendichte, usw., erfolgen.

Idealerweise sind die Querschnittsfläche des Spaltes 106 und die Summe der Querschnittsflächen der in der Mantelfläche des Hohlkörpers 100 vorgesehenen Eintrittsöffnungen 105 ident bzw. weichen vorzugsweise um nicht mehr als eine vorgegebene Maximalabweichung Eₘₐₓ voneinander ab. Dadurch kann insbesondere die Ausbildung von großen Staudrücken im Spalt 106 verhindert werden. Mit (großen) Staudrücken im Bereich des Sondeneingangs 201 verbundene Druckschwankungen können sich unter anderem negativ auf die weitere Analyse des entnommenen Abgases in einem Emissionsmessgerät 10 auswirken, was durch die Gleichheit der genannten Flächen effektiv verhindert wird.

Andererseits können bei saugendem Betrieb einer Abgasentnahmesonde 1 oder eines Emissionsmessgeräts 10 durch geeignete Abstimmung der Querschnittsfläche des Spaltes 106 auf die Summe der Querschnittsflächen der Eintrittsöffnungen 105 bestimmte Druckverhältnisse oder ein bestimmter Druckabfall über die Sondenspitze 3 sichergestellt werden. Eine solche Abstimmung der Querschnittsflächen kann insbesondere hinsichtlich transienter Druckänderungen in einem Abgasrohr, in dem die Abgasentnahmesonde 1 angeordnet ist, stabilisierend wirken.

Weiters ist der in Fig. 2 gezeigte Hohlkörper 100 lösbar im Gaskanal 200 angeordnet und/oder anordenbar und im dargestellten Ausführungsbeispiel mit der Innenwand des Gaskanals 200 verbunden. Im konkreten Fall ist die Mantelfläche des zweiten Hohlkörper-Abschnitts 102 als Außengewinde ausgeführt. Der korrespondierende Abschnitt der Innenwand der Sondenspitze 3 ist als korrespondierendes Innengewinde ausgeführt, sodass der Hohlkörper 100 mit der Sondenspitze 3 und damit dem Gaskanal 200 verschraubt werden kann. Das am Hohlkörper 100 vorgesehene Außengewinde bildet demnach die genannte erste Dichtfläche 109, das in der Sondenspitze 3, bzw. im Gaskanal 200, vorgesehene Innengewinde bildet die genannte gegengleiche zweite Dichtfläche. Zusätzlich wirkt der oben beschriebene Absatz im Gaskanal 200 dichtend.

Eine lösbare Verbindung zwischen Hohlkörper 100 und Innenwand des Gaskanals 200 ist insbesondere hinsichtlich der Wartbarkeit einer Abgasentnahmesonde 1 vorteilhaft. Durch eine lösbare Verbindung wird eine Reinigung aber auch ein Tausch eines Hohlkörpers 100 im Fall eines Defekts oder Schadens einfach möglich.

Um den Hohlkörper 100 in der Sondenspitze 3 festschrauben und wieder lösen zu können, ist auf der von der Austrittsöffnung 104 abgewandten Seite der fluiddicht verschlossenen Stirnseite 103 des Hohlkörpers 100 eine Werkzeugaufnahme 107 vorgesehen. Auf diese Weise kann der Hohlkörper 100 insbesondere im Wartungseinsatz mit geringem Aufwand montiert und wieder demontiert werden, beispielsweise um den Hohlkörper 100 zu reinigen oder um den Hohlkörper 100 auszutauschen. Eine Werkzeugaufnahme 107 ist als optionale Erweiterung des erfindungsgemäßen Hohlkörpers 100 zu sehen, und für den erfindungsgemäßen Schutz eines Emissionsmessgerätes 10 vor zu großen Partikeln nicht zwingend erforderlich. Eine Werkzeugaufnahme 107 kann als Mehrkantloch zur Aufnahme eines Mehrkantschlüssels ausgeführt sein, z.B. als Vierkantloch zur Aufnahme eines Vierkantschlüssels oder als Sechskantloch zur Aufnahme eines Sechskantschlüssels.

Eine Vertiefung als Werkzeugaufnahme 107 ist dabei, wie in Fig. 2 gezeigt, jedoch nicht als ein bis in den Hohlraum 108 des Hohlkörpers hindurchragendes Loch zu verstehen, wodurch der stirnseitige Verschluss der Stirnseite 103 des Hohlkörpers 100 verloren ginge. Auch Aufnahmen für andere Werkzeuge, wie für Schraubenschlüssel, Ringschlüssel, Rohrschlüssel oder Steckschlüssel sind zur Umsetzung einer Werkzeugaufnahme 107 denkbar. Im Fall einer nicht lösbaren Verbindung zwischen Hohlkörper 100 und Sondenspitze 3 oder Sondenkörper 4 oder im Fall einer Steckverbindung zwischen Hohlkörper 100 und Sondenspitze 3 oder Sondenkörper 4 kann auf eine Werkzeugaufnahme 107 auch verzichtet werden.

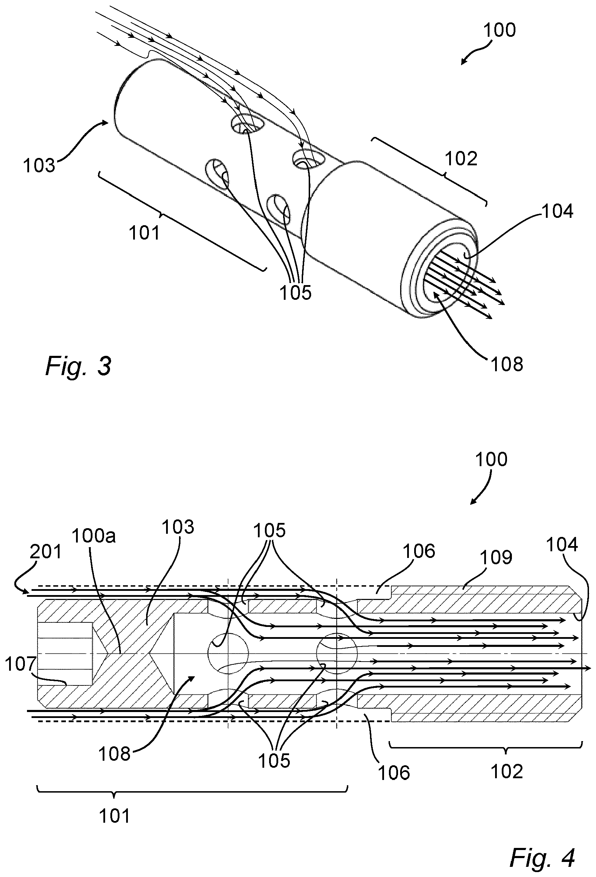

Mögliche Strömungsverhältnisse, wie sie sich um einen erfindungsgemäßen Hohlkörper 100 einstellen können, sind weiters in Fig. 3 gezeigt. Fig. 3 stellt einerseits die Wirkung einer fluiddicht verschlossenen Stirnseite 103 eines Hohlkörpers 100 dar. Frontal auf die verschlossene Stirnseite 103 des Hohlkörpers 100 zulaufende Strömungspfade werden ausgehend von der Stirnseite 103 umgelenkt, und bewegen sich zunächst entlang der verschlossenen Stirnseite 103 und anschließend entlang der Mantelfläche des Hohlkörpers 100 durch den Spalt 106 weiter. Die gezeigten Strömungspfade gelangen letztlich über eine oder mehrere Eintrittsöffnungen 105 in den Hohlraum 108 im Inneren des Hohlkörpers 100. Große Rußpartikel können den erwähnten Umlenkungen der Strömungspfade bei den in der Praxis auftretenden Strömungsgeschwindigkeiten üblicherweise nicht folgen und prallen folglich an der Stirnseite 103 ab. Hinsichtlich ihrer Wirkung auf große Rußpartikel kann eine Stirnseite 103 demnach auch als Prallplatte aufgefasst werden.

Neben dem ersten axialen Hohlkörper-Abschnitt 101 und dem zweiten axialen Hohlkörper-Abschnitt 102 ist in Fig. 3 die Austrittsöffnung 104 gezeigt, die den Hohlraum 108 durchströmbar mit dem Gaskanal 200 verbindet, sodass Abgas vom Hohlraum 108 des Hohlkörpers 100 über die zumindest eine Austrittsöffnung 104 zum Sondenausgang 202 strömen kann. Die Austrittsöffnung 104 erstreckt sich hierbei über beinahe die gesamte Querschnittsfläche der dem Sondeneingang 201 abgewandten Stirnseite des Hohlkörpers 100. Eine solche vergleichsweise große Austrittsöffnung 104 hat unter anderem den Zweck, den beim Übergang zwischen Hohlkörper 100 und Gaskanal 200 wirksamen Strömungswiderstand möglichst gering zu gestalten. Denkbar ist auch eine wesentlich kleinere Austrittsöffnung 104, oder mehrere, über die dem Sondeneingang 201 abgewandte Stirnseite des Hohlkörpers verteilte, kleine Austrittsöffnungen 104, um ein weiteres Hindernis für gegebenenfalls an diesem Punkt noch im Abgas verbliebene Rußpartikel vorzusehen.

Fig. 4 zeigt bei einem Hohlkörper 100 auftretende Strömungsverhältnisse in Form eines Schnittbildes mit einem Schnitt entlang einer Längserstreckung 100a des Hohlkörpers 100. Strichliert dargestellt ist die innere Mantelfläche des Gaskanals 200. Neben den bereits diskutierten Komponenten einer erfindungsgemäßen Abgasentnahmesonde 1 (erster Hohlkörper-Abschnitt 101, zweiter Hohlkörper-Abschnitt 102, verschlossene Stirnseite 103, Austrittsöffnung 104, Eintrittsöffnungen 105, Werkzeugaufnahme 107, Hohlraum 108, Dichtflächen 109, Sondeneingang 201) ist in Fig. 4 insbesondere die Wirkung des Spaltes 106 ersichtlich. Sämtliche vom Sondeneingang 201 und in Richtung des Sondenausgangs 202 verbleibenden Strömungspfade verlaufen durch den Spalt 106.

Wie eine erfindungsgemäße Abgasentnahmesonde 1 in der Praxis verwendet werden kann, ist in Fig. 5 dargestellt. Konkret zeigt Fig. 5 ein Emissionsmessgerät 10, an dem eine Abgasleitung 6 angeschlossen ist. Am dem Emissionsmessgerät 10 abgewandte Ende der Abgasleitung 6 ist eine erfindungsgemäße Abgasentnahmesonde 1 zur Entnahme von Abgas angeschlossen. Die Abgasentnahmesonde 1 ist mittels einer Befestigungseinheit 5 am Auspuff eines Fahrzeugs fixiert. Das an der Sondenspitze 3 vorgesehene, radial abstehende Stützelement 110 stellt sicher, dass die Abgasentnahmesonde 1 stets einen vorgegebenen Abstand von der Innenwand des Auspuffs einhält und nicht an der Innenwand des Auspuffs anliegt. In der in Fig. 5 gezeigten Anordnung kann Abgas gemäß den vorhergehenden Ausführungen aus dem Auspuff, über die Abgasentnahmesonde 1, in die Abgasleitung 6 bis hin zum Emissionsmessgerät 10 strömen, um dort untersucht bzw. analysiert zu werden.

In der Praxis ist es erforderlich, ein Emissionsmessgerät 10 regelmäßigen Überprüfungen zu unterziehen. Das kann ein Abgleich sein, beispielsweise durch eine Nullung mit einem Nullgas (reines Gas ohne Emissionsbestandteile, z.B. gefilterte Umgebungsluft) zum Einstellen eines Nullpunkts der Messung oder durch eine Kalibrierung mit einem Kalibriergas (Gas mit definierten Emissionsbestandteilen). Auch eine Dichtheitsprüfung des Sondensystems (Abgasentnahmesonde 1 mit der Abgasleitung 6 bis zum Emissionsmessgerät 10) oder des gesamten Gasweges innerhalb des Emissionsmessgerätes 10 ist üblicherweise regelmäßig durchzuführen. Insbesondere im Werkstattbetrieb und bei Verwendung durch Wartungspersonal ist es deshalb vorteilhaft, wenn sowohl der Abgleich, als auch die Dichtheitsprüfung möglichst einfach zu bewerkstelligen sind.

Um derartige Überprüfungen möglichst einfach zu gestalten, kann eine erfindungsgemäße Abgasentnahmesonde 1 in einer besonders vorteilhaften Weise eine Sondenspitze 3 aufweisen, deren Außenwand als Kupplungsteil 111 einer Verbindungskupplung ausgeführt ist.

In einer vorteilhaften Weise kann zusätzlich in einem in Kombination mit der Abgasentnahmesonde 1 verwendeten Emissionsmessgerät 10 eine Selbsttesteinheit 11 vorgesehen sein, an der ein zum Kupplungsteil 111 der Sondenspitze 3 korrespondierender Kupplungsteil einer Verbindungskupplung angeordnet ist, wobei zur Durchführung eines Selbsttests der erste Kupplungsteil 111 der Sondenspitze 3 mit dem zweiten Kupplungsteil an der Selbsttesteinheit 11 verbindbar ist.

Die Sondenspitze 3 der Abgasentnahmesonde 1 erfüllt somit eine Doppelfunktion: Einerseits die Abgasentnahme, andererseits eine Verbindung als Teil der Verbindungskupplung. So kann ein Selbsttest denkbar einfach durchgeführt werden. Es muss lediglich der Kupplungsteil 111 der Sondenspitze 3 mit dem Kupplungsteil an der Selbsttesteinheit 11 verbunden werden. Die Selbsttesteinheit 11 weist alle weiteren erforderlichen Merkmale für die Durchführung eines Selbsttests, insbesondere einer Dichtheitsprüfung und/oder einer Nullung oder Kalibrierung, auf. Es sind für den Selbsttest keine zusätzlich zu handhabenden Teile oder Komponenten von Nöten.

Eine entsprechend den vorangegangenen Ausführungen zweifach mit einem Emissionsmessgerät 10 verbundene Abgasentnahmesonde 1 ist in Fig. 6 dargestellt. Fig. 6 zeigt ebenso, dass das radial abstehende Stützelement 110 über seine eigentliche Funktion hinaus auch als Anschlag beim Installieren der Sondenspitze 3 in einer Kupplungsaufnahme (in Fig. 6 am Emissionsmessgerät 10) eingesetzt werden kann.

## Patentansprüche

1. Abgasentnahmesonde (1) mit einem Sondeneingang (201), einem Sondenausgang (202) und einem den Sondeneingang (201) mit dem Sondenausgang (202) verbindenden Gaskanal (200), **dadurch gekennzeichnet, dass** ein Hohlkörper (100) zumindest teilweise, vorzugsweise vollständig im Gaskanal (200) der Abgasentnahmesonde (1) angeordnet ist, wobei der Hohlkörper (100) einen von einer Mantelfläche des Hohlkörpers (100) umgebenen Hohlraum (108), zumindest eine in der Mantelfläche des Hohlkörpers (100) angeordnete Eintrittsöffnung (105), zumindest eine, auf einer dem Sondenausgang (202) zugewandten Seite des Hohlkörpers (100) angeordnete Austrittsöffnung (104) und eine vom Sondenausgang (202) abgewandte, fluiddicht verschlossene Stirnseite (103) aufweist, **dass** am Hohlkörper (100) zwischen der verschlossenen Stirnseite (103) und zumindest einer der Austrittsöffnung (104) nächstgelegenen Eintrittsöffnung (105) ein entlang einer Längserstreckung (100a) des Hohlkörpers (100) verlaufender erster Hohlkörper-Abschnitt (101) ausgebildet ist, dessen durch seine Mantelfläche definierte, normal zur Längserstreckung (100a) des Hohlkörpers (100) orientierte äußere Querschnittsfläche kleiner ist als eine innere Querschnittsfläche des Gaskanals (200) im Bereich des ersten axialen Hohlkörper-Abschnitts (101), so dass sich im Bereich des ersten Hohlkörper-Abschnitts (101) im Gaskanal (200) zumindest ein Spalt (106) ausbildet, welcher den Sondeneingang (201) mit der zumindest einen Eintrittsöffnung (105) durchströmbar verbindet, **und dass** entlang der Längserstreckung (100a) des Hohlkörpers (100) zwischen dem ersten Hohlkörper-Abschnitt (101) und der Austrittsöffnung (104) ein zweiter Hohlkörper-Abschnitt (102) ausgebildet ist, dessen normal zur Längserstreckung (100a) des Hohlkörpers (100) orientierte äußere Querschnittsfläche korrespondierend zur inneren Querschnittsfläche des Gaskanals (200) ausgeführt ist, so dass ein Strömungsweg durch die Abgasentnahmesonde (1) vom Sondeneingang (201) durch den zumindest einen Spalt (106) über die zumindest eine Eintrittsöffnung (105) durch den Hohlraum (108) des Hohlkörpers (100) über die zumindest eine Austrittsöffnung (104) zum Sondenausgang (202) verläuft.

2. Abgasentnahmesonde (1) nach Anspruch 1, **dadurch gekennzeichnet, dass** an einer vom Sondeneingang (201) abgewandten Seite des zweiten Hohlkörper-Abschnitts (102) zumindest eine Dichtfläche (109) ausgebildet ist, die im montierten Zustand des Hohlkörpers (100) mit einer korrespondierenden Dichtfläche der inneren Oberfläche des Gaskanals (200) dichtend zusammenwirkt.

3. Abgasentnahmesonde (1) nach Anspruch 1 oder 2, **dadurch gekennzeichnet, dass** der Hohlkörper (100) lösbar im Gaskanal (200) angeordnet und/oder anordenbar ist, wobei der Hohlkörper (100) vorzugsweise mit der Innenwand des Gaskanals (200) verbunden ist.

4. Abgasentnahmesonde (1) nach einem der Ansprüche 1 bis 3, **dadurch gekennzeichnet, dass** auf der von der Austrittsöffnung (104) abgewandten Seite der fluiddicht verschlossenen Stirnseite (103) des Hohlkörpers (100) eine Werkzeugaufnahme (107) vorgesehen ist.

5. Abgasentnahmesonde (1) nach einem der Ansprüche 1 bis 4, **dadurch gekennzeichnet, dass** die Abgasentnahmesonde (1) zwei- oder mehrteilig ausgeführt ist, mit dem Hohlkörper (100), einer das erste axiale Ende der Abgasentnahmesonde (1) bildenden Sondenspitze (3) und einem axial an die Sondenspitze (3) anschließenden Sondenkörper (4).

6. Abgasentnahmesonde (1) nach Anspruch 5, **dadurch gekennzeichnet, dass** der Hohlkörper (100) zumindest teilweise, vorzugsweise vollständig innerhalb der Sondenspitze (3) angeordnet ist.

7. Abgasentnahmesonde (1) nach einem der Ansprüche 5 oder 6, **dadurch gekennzeichnet, dass** die Sondenspitze (3) als Kupplungsteil (111) einer Verbindungskupplung ausgeführt ist.

8. Abgasentnahmesonde (1) nach einem der Ansprüche 1 bis 7, **dadurch gekennzeichnet, dass** an der Außenwand der Abgasentnahmesonde (1), vorzugsweise im Bereich der Sondenspitze (3), zumindest ein radial abstehendes Stützelement (110) vorgesehen ist.

9. Abgasentnahmesonde (1) nach einem der Ansprüche 1 bis 8, **dadurch gekennzeichnet, dass** die radiale Querschnittsfläche des Spaltes (106) im Wesentlichen der Summe der Querschnittsflächen der in der Mantelfläche des Hohlkörpers (100) vorgesehenen Eintrittsöffnungen (105) entspricht, wobei die radiale Querschnittsfläche des Spaltes (106) vorzugsweise um nicht mehr als eine vorgegebene Maximalabweichung Eₘₐₓ von der Summe der Querschnittsflächen der in der Mantelfläche des Hohlkörpers (100) vorgesehenen Eintrittsöffnungen (105) abweicht.

10. Abgasentnahmesonde (1) nach Anspruch 9, **dadurch gekennzeichnet, dass** die vorgegebene Maximalabweichung Eₘₐₓ als Relativwert der Summe der Querschnittsflächen der in der Mantelfläche des Hohlkörpers (100) vorgesehenen Eintrittsöffnungen (105) festgelegt ist, wobei die Maximalabweichung Eₘₐₓ einem Relativwert von 30%, oder einem Relativwert von 20%, oder einem Relativwert von 10% entspricht.

11. Abgasentnahmesonde (1) nach einem der vorhergehenden Ansprüche, **dadurch gekennzeichnet, dass** die jeweiligen Durchmesser der in der Mantelfläche des Hohlkörpers (100) vorgesehenen Eintrittsöffnungen (105) jeweils kleiner als ein vorgegebener Maximaldurchmesser Dₘₐₓ sind, wobei der Maximaldurchmesser Dₘₐₓ in einem Wertebereich von 10µm bis 100mm, oder in einem Wertebereich von 100µm bis 10mm, oder in einem Wertebereich von 500µm bis 10mm liegt.

12. Abgasentnahmesonde (1) nach einem der vorhergehenden Ansprüche, **dadurch gekennzeichnet, dass** an der Außenwand der Abgasentnahmesonde (1), vorzugsweise im Bereich des Sondenausgangs (202), eine Befestigungseinheit (5) zur Befestigung der Abgasentnahmesonde (1) an einem Abgasrohr vorgesehen ist.

13. Verwendung einer Abgasentnahmesonde (1) nach einem der vorhergehenden Ansprüche in einem Emissionsmessgerät (10), wobei am Emissionsmessgerät (10) eine Abgasleitung (6) angeschlossen ist, und wobei die Abgasentnahmesonde (1) mit dem vom Emissionsmessgerät (10) abgewandten Ende der Abgasleitung (6) verbunden oder verbindbar ist.

14. Emissionsmessgerät (10) mit zumindest einer Abgasentnahmesonde (1) nach einem der Ansprüche 1 bis 12.

## Claims

1. Exhaust gas sampling probe (1) comprising a probe input (201), a probe output (202) and a gas channel (200) which connects the probe input (201) to the probe output (202), **characterized in that** a hollow body (100) is arranged at least partly, preferably completely, in the gas channel (200) of the exhaust gas sampling probe (1), the hollow body (100) having a cavity (108) which is surrounded by a lateral surface of the hollow body (100), at least one inlet opening (105) which is arranged in the lateral surface of the hollow body (100), at least one outlet opening (104) which is arranged on a side of the hollow body (100) facing the probe output (202), and a fluid-tight, sealed end face (103) which faces away from the probe output (202), **in that** a first hollow body portion (101) is formed on the hollow body (100) between the sealed end face (103) and at least one inlet opening (105) closest to the outlet opening (104), which first hollow body portion extends along a longitudinal extension (100a) of the hollow body (100) and of which first hollow body portion an outer cross-sectional area, which is defined by its lateral surface and oriented normally with respect to the longitudinal extension (100a) of the hollow body (100), is smaller than an inner cross-sectional area of the gas channel (200) in the region of the first axial hollow body portion (101), so that at least one gap (106) is formed in the region of the first hollow body portion (101) in the gas channel (200), which gap connects the probe input (201) to the at least one inlet opening (105) in a way that allows flow, **and in that** a second hollow body portion (102) is formed along the longitudinal extension (100a) of the hollow body (100) between the first hollow body portion (101) and the outlet opening (104), of which second hollow body portion an outer cross-sectional area, which is oriented normally with respect to the longitudinal extension (100a) of the hollow body (100), is designed to correspond to the inner cross-sectional area of the gas channel (200), so that a flow path through the exhaust gas sampling probe (1) extends from the probe input (201) through the at least one gap (106) via the at least one inlet opening (105) through the cavity (108) of the hollow body (100) via the at least one outlet opening (104) to the probe output (202).

2. Exhaust gas sampling probe (1) according to claim 1,
**characterized in that** at least one sealing surface (109) is formed on a side of the second hollow body portion (102) facing away from the probe input (201), which sealing surface cooperates with a corresponding sealing surface of the inner surface of the gas channel (200) in the assembled state of the hollow body (100).

3. Exhaust gas sampling probe (1) according to claim 1 or 2,
**characterized in that** the hollow body (100) is arranged and/or can be arranged detachably in the gas channel (200), the hollow body (100) preferably being connected to the inner wall of the gas channel (200).

4. Exhaust gas sampling probe (1) according to any of claims 1 to 3, **characterized in that** a tool holder (107) is provided on the side of the fluid-tight, sealed end face (103) of the hollow body (100) facing away from the outlet opening (104).

5. Exhaust gas sampling probe (1) according to any of claims 1 to 4, **characterized in that** the exhaust gas sampling probe (1) is designed in two or more parts, with the hollow body (100), a probe tip (3) which forms the first axial end of the exhaust gas sampling probe (1), and a probe body (4) which axially adjoins the probe tip (3).

6. Exhaust gas sampling probe (1) according to claim 5,
**characterized in that** the hollow body (100) is arranged at least partly, preferably completely, within the probe tip (3).

7. Exhaust gas sampling probe (1) according to either of claims 5 or 6, **characterized in that** the probe tip (3) is designed as a coupling part (111) of a connecting coupling.

8. Exhaust gas sampling probe (1) according to any of claims 1 to 7, **characterized in that** at least one radially projecting support element (110) is provided on the outer wall of the exhaust gas sampling probe (1), preferably in the region of the probe tip (3).

9. Exhaust gas sampling probe (1) according to any of claims 1 to 8, **characterized in that** the radial cross-sectional area of the gap (106) substantially corresponds to the sum of the cross-sectional areas of the inlet openings (105) provided in the lateral surface of the hollow body (100), the radial cross-sectional area of the gap (106) preferably deviating by no more than a predetermined maximum deviation Eₘₐₓ from the sum of the cross-sectional areas of the inlet openings (105) provided in the lateral surface of the hollow body (100).

10. Exhaust gas sampling probe (1) according to claim 9,
**characterized in that** the predetermined maximum deviation Eₘₐₓ is defined as a relative value of the sum of the cross-sectional areas of the inlet openings (105) provided in the lateral surface of the hollow body (100), the maximum deviation Eₘₐₓ corresponding to a relative value of 30%, or a relative value of 20%, or a relative value of 10%.

11. Exhaust gas sampling probe (1) according to any of the preceding claims, **characterized in that** each of the diameters of the inlet openings (105) provided in the lateral surface of the hollow body (100) are each smaller than a predetermined maximum diameter Dₘₐₓ, the maximum diameter Dₘₐₓ being in a value range of from 10 µm to 100 mm, or in a value range of from 100 µm to 10 mm, or in a value range of from 500 µm to 10 mm.

12. Exhaust gas sampling probe (1) according to any of the preceding claims, **characterized in that** an attachment unit (5) for attaching the exhaust gas sampling probe (1) to an exhaust gas pipe is provided on the outer wall of the exhaust gas sampling probe (1), preferably in the region of the probe output (202).

13. Use of an exhaust gas sampling probe (1) according to any of the preceding claims in an emission measuring apparatus (10), wherein an exhaust gas line (6) is joined to the emission measuring apparatus (10), and wherein the exhaust gas sampling probe (1) is connected or can be connected to the end of the exhaust gas line (6) facing away from the emission measuring apparatus (10).

14. Emission measuring apparatus (10) comprising at least one exhaust gas sampling probe (1) according to any of claims 1 to 12.

## Revendications

1. Sonde de prélèvement de gaz d'échappement (1) comportant une entrée de sonde (201), une sortie de sonde (202) et un canal de gaz (200) reliant l'entrée de sonde (201) à la sortie de sonde (202), **caractérisée en ce qu'**un corps creux (100) est disposé au moins partiellement, de préférence entièrement, dans le canal de gaz (200) de la sonde de prélèvement de gaz d'échappement (1), dans laquelle le corps creux (100) présente un espace creux (108) entouré par une surface d'enveloppe du corps creux (100), au moins une ouverture d'admission (105) disposée dans la surface d'enveloppe du corps creux (100), au moins une ouverture d'évacuation (104) disposée sur un côté du corps creux (100) tourné vers la sortie de sonde (202), et une face frontale (103) fermée de manière étanche aux fluides et opposée à la sortie de sonde (202), **en ce qu'**une première section de corps creux (101) est formée sur le corps creux (100), entre la face frontale (103) fermée et au moins une ouverture d'admission (105) la plus proche de l'ouverture d'évacuation (104), laquelle première section de corps creux s'étend le long d'une extension longitudinale (100a) du corps creux (100) et sa surface de section transversale extérieure définie par sa surface d'enveloppe et orientée perpendiculairement à l'extension longitudinale (100a) du corps creux (100) est plus petite qu'une surface de section transversale intérieure du canal de gaz (200) dans la zone de la première section de corps creux (101) axiale, de sorte qu'au moins une fente (106) se forme dans la zone de la première section de corps creux (101) dans le canal de gaz (200), laquelle fente relie l'entrée de sonde (201) à l'au moins une ouverture d'admission (105) de manière à pouvoir être traversée par un écoulement, **et en ce que**, le long de l'extension longitudinale (100a) du corps creux (100), une seconde section de corps creux (102) est formée entre la première section de corps creux (101) et l'ouverture d'évacuation (104), seconde section de corps creux dont la surface de section transversale extérieure orientée perpendiculairement à l'extension longitudinale (100a) du corps creux (100) est conçue de manière à correspondre à la surface de section transversale intérieure du canal de gaz (200), de sorte qu'un trajet d'écoulement à travers la sonde de prélèvement de gaz d'échappement (1) s'étend depuis l'entrée de sonde (201) à travers l'au moins une fente (106), en passant par l'au moins une ouverture d'admission (105), à travers l'espace creux (108) du corps creux (100), en passant par l'au moins une ouverture d'évacuation (104), jusqu'à la sortie de sonde (202).

2. Sonde de prélèvement de gaz d'échappement (1) selon la revendication 1, **caractérisée en ce qu'**au moins une surface d'étanchéité (109) est formée sur un côté de la seconde section de corps creux (102) opposé à l'entrée de sonde (201), laquelle surface d'étanchéité coopère de manière étanche avec une surface d'étanchéité correspondante de la surface intérieure du canal de gaz (200) à l'état monté du corps creux (100).

3. Sonde de prélèvement de gaz d'échappement (1) selon la revendication 1 ou 2, **caractérisée en ce que** le corps creux (100) est disposé et/ou peut être disposé de manière amovible dans le canal de gaz (200), dans laquelle le corps creux (100) est de préférence relié à la paroi intérieure du canal de gaz (200).

4. Sonde de prélèvement de gaz d'échappement (1) selon l'une des revendications 1 à 3, **caractérisée en ce qu'**un logement pour outil (107) est prévu sur le côté opposé à l'ouverture d'évacuation (104) de la face frontale (103) du corps creux (100), laquelle face frontale est fermée de manière étanche aux fluides.

5. Sonde de prélèvement de gaz d'échappement (1) selon l'une des revendications 1 à 4, **caractérisée en ce que** la sonde de prélèvement de gaz d'échappement (1) est conçue en deux parties ou plus, avec le corps creux (100), une pointe de sonde (3) formant la première extrémité axiale de la sonde de prélèvement de gaz d'échappement (1) et un corps de sonde (4) se raccordant axialement à la pointe de sonde (3).

6. Sonde de prélèvement de gaz d'échappement (1) selon la revendication 5, **caractérisée en ce que** le corps creux (100) est disposé au moins partiellement, de préférence entièrement, à l'intérieur de la pointe de sonde (3).

7. Sonde de prélèvement de gaz d'échappement (1) selon l'une des revendications 5 ou 6, **caractérisée en ce que** la pointe de sonde (3) est conçue sous forme de pièce d'accouplement (111) d'un accouplement de liaison.

8. Sonde de prélèvement de gaz d'échappement (1) selon l'une des revendications 1 à 7, **caractérisée en ce qu'**au moins un élément de support (110) faisant saillie radialement est prévu sur la paroi extérieure de la sonde de prélèvement de gaz d'échappement (1), de préférence dans la zone de la pointe de sonde (3).

9. Sonde de prélèvement de gaz d'échappement (1) selon l'une des revendications 1 à 8, **caractérisée en ce que** la surface de section transversale radiale de la fente (106) correspond sensiblement à la somme des surfaces de section transversale des ouvertures d'admission (105) prévues dans la surface d'enveloppe du corps creux (100), dans laquelle la surface de section transversale radiale de la fente (106) ne s'écarte de préférence pas de plus d'un écart maximal Eₘₐₓ prédéfini de la somme des surfaces de section transversale des ouvertures d'admission (105) prévues dans la surface d'enveloppe du corps creux (100).

10. Sonde de prélèvement de gaz d'échappement (1) selon la revendication 9, **caractérisée en ce que** l'écart maximal Eₘₐₓ prédéfini est déterminé comme valeur relative de la somme des surfaces de section transversale des ouvertures d'admission (105) prévues dans la surface d'enveloppe du corps creux (100), dans laquelle l'écart maximal Eₘₐₓ correspond à une valeur relative de 30 %, ou à une valeur relative de 20 %, ou à une valeur relative de 10 %.

11. Sonde de prélèvement de gaz d'échappement (1) selon l'une des revendications précédentes, **caractérisée en ce que** les diamètres respectifs des ouvertures d'admission (105) prévues dans la surface d'enveloppe du corps creux (100) sont respectivement inférieurs à un diamètre maximal Dₘₐₓ prédéfini, dans laquelle le diamètre maximal Dₘₐₓ se situe dans une plage de valeurs allant de 10 µm à 100 mm, ou dans une plage de valeurs allant de 100 µm à 10 mm, ou dans une plage de valeurs allant de 500 µm à 10 mm.

12. Sonde de prélèvement de gaz d'échappement (1) selon l'une des revendications précédentes, **caractérisée en ce qu'**une unité de fixation (5) est prévue sur la paroi extérieure de la sonde de prélèvement de gaz d'échappement (1), de préférence dans la zone de la sortie de sonde (202), pour la fixation de la sonde de prélèvement de gaz d'échappement (1) à un tuyau d'échappement.

13. Utilisation d'une sonde de prélèvement de gaz d'échappement (1) selon l'une des revendications précédentes dans un appareil de mesure d'émissions (10), dans laquelle une conduite de gaz d'échappement (6) est raccordée à l'appareil de mesure d'émissions (10), et dans laquelle la sonde de prélèvement de gaz d'échappement (1) est reliée ou peut être reliée à l'extrémité de la conduite de gaz d'échappement (6) qui est opposée à l'appareil de mesure d'émissions (10).

14. Appareil de mesure d'émissions (10) comportant au moins une sonde de prélèvement de gaz d'échappement (1) selon l'une des revendications 1 à 12.
